Europäisches Patentamt

**European Patent Office**

**Office européen des brevets**

(19)

(11) Publication number: **0 444 001 A1**

(12)

# EUROPEAN PATENT APPLICATION

(21) Application number: **91850038.0**

(22) Date of filing: **18.02.91**

(51) Int. Cl.⁵: **G01B 7/02, B65H 61/00**

(30) Priority: **19.02.90 SE 9000573**

(43) Date of publication of application:
**28.08.91 Bulletin 91/35**

(84) Designated Contracting States:
**AT BE CH DE DK ES FR GB GR IT LI LU NL SE**

(71) Applicant: **TRELLEBORG AB**
**S-231 81 Trelleborg (SE)**

(72) Inventor: **Jensen, Jörgen Ulf**
**Masvägen 7**
**S-230 22 Smygehamn (SE)**

(74) Representative: **Lundin, Björn-Eric**
**Trelleborg AB Patents and Trade Marks Box 21024**
**S-100 31 Stockholm (SE)**

(54) **Method and arrangement for indicating a length of a hose or tubing.**

(57) The invention relates to a method of indicating instantaneously a length of hose or tubing, such as flexible tubing, comprising a plurality of material layers, of which at least one is a polymeric material layer, during the manufacture or use of the hose, wherein indicators having properties which can be detected from outside the hose or the tubing are spaced at predetermined distances apart along the length of the hose or the tubing. The invention is characterized in that the indicators are enclosed by at least one of the material layers and that the indicators used are made from an amorphous, highly permeable soft-magnetic material, and that detection is effected in a magnetic alternating field.
The invention also relates to an arrangement in hoses or tubing for carrying out the method.

EP 0 444 001 A1

## INDICATING A LENGTH OF A HOSE OR TUBING

The present invention relates to a method of enabling a length of a hose or tubing which comprises a plurality of material layers, of which at least one is composed of polymeric material, to be indicated instantaneously during the manufacture or the use of the hose, wherein indicators having properties which are detectable from outside the hose or tubing are disposed at predetermined distances along said hose or tubing.

When manufacturing or using hoses or tubing, it is often necessary to measure more or less continuously the length of the hose or tubing which has been used at a particular moment in time or to measure the length of hose or tubing that has been manufactured during the process of manufacture. By hose lengths which are in use at a particular moment in time is meant, for instance, the length of hose taken from a drum, coiling machine, or the like in use.

A specific example is found in this respect in connection with work that involves the flushing of waste or sewage pipes, for instance the pipes of municipal sewage systems, with water under high pressure, in which there is used a so-called passage flushing hose fitted with a special-duty flushing nozzle which generates an ejector effect. The hose is normally transported and stored while coiled on a drum mounted on a special-duty vehicle designed for flushing or scouring purposes. The nozzle and hose are passed into a sewage pipe and as a result of the ejector effect generated by the nozzle when flushing the pipe, the hose is successively unwound from the transport drum and passes further into or further along the sewage pipe. Such flushing hoses normally have a length of from 120-140 m, although they may also be much longer than this. If the sewage pipe contains a blockage which prevents the flushing nozzle from passing further into the pipe, despite the high pressure of the flushing liquid and despite repeated attempts to dislodge the blockage, there is often no other recourse than to dig down to the sewage pipe and remedy the stoppage in the most suitable manner. Naturally, it is highly desirable to localize the blockage or stoppage quickly from ground level, so that excavation work can be concentrated to the location of the stoppage. It is also desirable, in some cases, to enable the work of flushing pipes, drains, to be recorded and the records used, for instance, as a basis for calculating piece-work. Those hoses which are used today for flushing pipes and like passageways are often provided with external markings in the form of so-called label attached at distances of five meters apart for instance. Thus, when a stoppage or blockage is encountered, the number of markings on the length of hose used can be recorded manually as the hose is withdrawn from the sewage pipe and wound onto the transport drum, thereby enabling the stoppage to be located roughly. The markings, however, tend to be torn-off relatively quickly, or are lost in some other way due to the harsh environmental conditions in which such work is carried out and due to the extremely heavy wear to which the hoses are subjected in use. It may also be necessary to remove part of a hose or to repair a hose and therewith remove some of the markings or render the markings undiscernible.

DE-A-27 57 363 (Siemens) teaches a method of marking cables and other wire-like materials in a manner which will enable the lengths of cables produced during cable manufacture to be determined. When the cable has a mantle surface which consists of polymeric material, marking is effected in this case directly on the cable surface, for instance by means of an ink writer . This method of marking cables is thus, in principle, analogous with the aforedescribed method of marking hoses externally with so-called labels and does not therefore provide a solution to the problems disclosed in the introduction.

JP-A-61-56906 (Showa Electric) teaches a method of marking cables which will enable the position of the cable to be determined in connection with the reciprocating movement of a robot connected to the cable. According to this method, pieces of iron or some other magnetic material are attached to the underside of the cable at given distances apart. The publication indicates that these material pieces can be mounted or attached during the manufacture of a cable and it is thus assumed that said pieces may also be enclosed in the cable. The material pieces can then be detected with the aid of sensors which are responsive to magnetic material, e.g. so-called Hall-elements. Movement of the cable is determined with the aid of particularly complicated equipment which includes many different circuits, some of which are also duplicated in order to enable the directions in which a cable moves to be determined. The method also assumes that information relating to the direction of movement of the cable is obtained continuously from the prevailing direction of rotation of the motor responsible for robot movement. It will be obvious that this method cannot be applied with hoses used in the aforementioned fields, among other things for the simple reason that directional indications cannot be obtained from a motor, at least not while the hose is in use. The concept of attaching pieces of iron or some other magnetic material embedded in a hose is not feasible in the present case, in view of the useful length of life of the hose and its mechanical strength in bending, for instance, since hard metal pieces will create serious weakenings in the hose and therewith greatly reduce the useful life of the hose, particularly in the aforedescribed advanced use of such hoses.

The risk of such metal pieces becoming corroded must also be taken into account, since corroding gases are liable to diffuse through the outer rubber sheathing of the cable and cause the metal pieces to gradually corrode away, therewith rendering detection impossible or at least very difficult.

Thus, there is a need for indicating continuously the length of hose or tubing which has been used at any particular moment in time or indicating continuously the length of hose or tubing that has been manufactured at any particular moment in the manufacturing process, without risking that the hose or tubing markings have been torn-off or destroyed by chemical and/or mechanical action, or the risk that the hoses or tubing themselves will be seriously weakened with respect to their mechanical strength. Furthermore, it is highly desirable that the hose or the tubing can be measured reliably over the whole of its useful life, and that any markings on the hose will be able to function as indicators irrespective of the manner in which the hoses or tubing are handled and that the properties or nature of these markings will not change. It is preferred, among other things, that indicators which are to be embedded in the hose or the tubing are equally as flexible as the material layer of the hose or tubing wall and have the smallest possible area, and that it is also possible to detect movement directions in a simple manner without requiring external information relating to motor rotation. The present invention relates to a method which enables a hose length to be indicated instantaneously quite independently of the external and internal circumstances. The invention also relates to a hose or tubing provided with detectors for carrying out the method. The inventive method and the inventive hose arrangement are characterized by the features set forth in the following method and apparatus claims.

When carrying out the inventive method, which will be described hereinafter in more detail, the indicators are made from amorphous, highly permeable soft-magnetic material and are enclosed by at least one of the layers of material forming the hose or the tubing, and detection is effected in a magnetic alternating field, for instance through the occurrence of overtones.

The indicators have the form of wires or strips made of an amorphous, highly permeable soft-magnetic material which are mutually spaced at predetermined distances apart within the wall of the hose or flexible tubing. The indicators are preferably arranged substantially in the longitudinal direction of the hose or tubing.

It is stated in the main claim that the indicators shall be enclosed by at least one of the different material layers from which the hose or the tubing is made, although in view of the fact that, in accordance with the invention, it shall also be possible to use the hose or the tubing subsequent to a given degree of wear of the outermost hose layers, it is preferred that the indicators are arranged inwardly of at least one outermost reinforcing layer of the hose or the tubing, since the hose or the tubing is normally scrapped when the outermost reinforcing layer begins to be worn.

The amorphous material from which the indicators are made may be a metal, metal alloy or some other metal compound capable of retaining a given amorphous structure having specific magnetic properties, substantially irrespective of external circumstances, such as temperature, atmosphere and mechanical action for instance. Such amorphous material is commercially available and is the product of several manufacturers, for instance under the trade designation VITROVAC, which is marketed by Vacuumschmelze GmbH and which is based on metals within the group Fe, Ni and Co, and metalloids such as B and Si, in an amount of 5-15%. The fact that amorphous material is particularly suitable for use in monitoring goods, since such materials retain their properties despite being repeatedly bent, is revealed in EP-A-0 017 801 (Allied Chemical Corp).

When the hose or tubing is liable to be moved backwards and forwards during use and during length indicating operations, it is important that a detected length of the hose or the tubing is added to the recorded detected length in one direction and is substrated from said recorded detected length when the hose is moved in the opposite direction. Thus, if the hose or the tubing is repeatedly moved backwards and forwards past a detector in a passageway flushing operation, in an attempt to force a blockage in the passageway, it is the prevailing length of the hose or the tubing coiled on the drum that shall be indicated and not the total length of the hose or the tubing which has passed the detectors in both directions.

In accordance with one simple and practical embodiment of the invention by means of which movement of the hose or the tubing can be indicated, as aforedescribed, there is used a detector arrangement which comprises two mutually overlapping response zones. These two mutually overlapping response zones are preferably obtained by including in the detector arrangement two coils which are spaced mutually in an axial direction but located relatively close to one another. These coils are supplied with one and the same alternating current, wherein the resultant electromagnetic fields engendered by respective coils mutually coact in the area between the coils. Connected to each coil is a device for receiving information in the form of a signal from a respective coil as an indicator provided in the hose passes the magnetic field concerned. Thus, there is obtained in the area between the coils a signal from both of said coils, since the magnetic fields overlap. The signal obtained has the form of overtones. The technique of detecting strips of highly permeable material with the aid of overtones was first described in French Patent Specification 763 681, Pierre A. Picard.

According to one preferred embodiment, series-connected coils are connected to a resonance circuit which has a low impedance for current of the frequency at which the magnetic field is generated and a high impedance for one part of the overtone spectrum of said field.

The coils are spaced axially and are suitably arranged so that the area in which a signal is obtained from both coils is equally as large as each of those areas in which a signal is obtained solely from one or the other of the coils. This provides a simple and operationally reliable method of enabling the direction moved by the hose to be indicated in conjunction with indicating a hose length. It is necessary that passage of an indicating device past the coils must always be commenced and terminated with a signal from solely one of the coils. The direction in which the hose moves is indicated by comparing an initial coil signal with a terminal coil signal. When one and the same coil produces both an initial and a terminal coil signal, this will indicate that no indicating device has passed beyond the coils and that the indicating device has merely been located within the coil area and has turned and left said area.

It will be evident from the aforegoing that the indicating devices must be spaced at a given smallest distance apart such as to enable a state to be obtained where no signal is produced from any of the coils.

It is particularly important, in many instances, that external disturbances will not influence the indicating system, for instance disturbances from surrounding or adjacent material of the hose or the tubing or foreign bodies liable to fasten on or accompany the hose or the flexible tubing through the detector in any other way, for instance layers of rust, scale, tool chips or dust or other particulate material. Such problems are totally eliminated by the inventive method, and also problems of the kind described in the introduction. The indicators used when practising the present invention also have permanently detectable properties and cannot be unintentionally demagnetised.

## Claims

1. A method of indicating instaneously a length of a hose or tubing which comprises a plurality of material layers, of which at least one is a polymeric layer, wherein indicators having properties which can be detected from outside the hose or the tubing are disposed at a predetermined distance apart along the hose or the tubing, **characterized** in that the indicators are enclosed by at least one of the material layers ; and in that the indicators are made from an amorphous, highly permeable soft-magnetic material and that detection is effected in a magnetic alternating field.

2. An arrangement in hoses or tubing for carrying out the method according to Claim 1, **characterized** by wire-like or strip-like indicators made of an amorphous, highly permeable soft-magnetic material and arranged within the hose or the tubing at predetermined distances apart.

3. An arrangement according to Claim 2, **characterized** in that the indicators are disposed substantially in the longitudinal extension of the hose or tubing.

4. An arrangement according to Claim 2 or 3, **characterized** in that the indicators are arranged inwardly of at least one reinforcing layer of the hose or tubing.

5. An arrangement for carrying out the method according to Claim 1 which includes detectors for indicating hose or tubing lengths, **characterized** by two mutually overlapping response zones.

6. An arrangement according to Claim 5, **characterized** by two parallel-connected coils for producing said response zones ; and in that the coils are spaced at a relatively small distance apart.

7. An arrangement according to Claim 5 or 6, **characterized** in that connected in series with each coil is a resonance circuit which has a low impedance for current of the frequency at which the magnetic alternating field is produced and a high impedance for part of the overtone spectrum of said field.

8. An arrangement according to any one of Claims 5-7, **characterized** in that the overlap area of the response zones is essentially equally as large as each of the non-overlapping areas of the response zones.

EP 0 444 001 A1

| | | European Patent Office | | **EUROPEAN SEARCH REPORT** | Application number EP 91 850 038.0 |

## DOCUMENTS CONSIDERED TO BE RELEVANT

| Category | Citation of document with indication, where appropriate, of relevant passages | Relevant to claim | CLASSIFICATION OF THE APPLICATION (Int Cl⁵) |
|---|---|---|---|
| A,D | PATENT ABSTRACTS OF JAPAN vol. 10, no. 220 (P-482)(2276), 31 st July 1986;&JP-A-6156 906 (SHOWA ELECTRIC WIRE & CABLE CO LTD) 22-03-1986 - - - | 1-3 | G 01 B 7/02 B 65 H 61/00 |
| A,D | DE-C-2 757 363 (SIEMENS AG) - - - - - | 1-3 | |

**TECHNICAL FIELDS SEARCHED (Int Cl⁵)**

G 01 B
B 65 H
G 01 D

The present search report has been drawn up for all claims

| Place of search STOCKHOLM | Date of completion of the search 21-05-1991 | Examiner JOSEFSSON I. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82